**Europäisches Patentamt**

(19) **European Patent Office**

**Office européen des brevets**

(11) Publication number : **0 422 712 B1**

(12) # EUROPEAN PATENT SPECIFICATION

(45) Date of publication of patent specification :
09.03.94 Bulletin 94/10

(51) Int. Cl.⁵ : **A23D 7/02**, A23D 7/00

(21) Application number : 90202570.9

(22) Date of filing : 28.09.90

(54) **Process for manufacture of edible spreads and apparatus for the performance of said process.**

The file contains technical information
submitted after the application was filed and
not included in this specification

(30) Priority : **09.10.89 GB 8922718**
**01.03.90 GB 9004615**
**04.05.90 GB 9010131**

(43) Date of publication of application :
**17.04.91 Bulletin 91/16**

(45) Publication of the grant of the patent :
**09.03.94 Bulletin 94/10**

(84) Designated Contracting States :
**AT BE CH DE DK ES FR GB GR IT LI NL SE**

(56) References cited :
**EP-A- 0 276 517**
**CA-A- 1 170 498**
**FR-A- 1 480 564**
**GB-A- 1 046 516**
**US-A- 2 797 164**
**US-A- 4 849 243**

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Havenstein, Alfred Gustav**
**Baumschulenweg 12asse 8**
**D-2000 Schenefeld (DE)**
Inventor : **Huffziger, Axel**
**Eberhofsteig 3b**
**D-2000 Hamburg 62 (DE)**

(74) Representative : **Keppels, Willem Richard**
**Engelbertus Gerardus, Drs. et al**
**Unilever N.V. Patent Division P.O.Box 137**
**NL-3130 AC Vlaardingen (NL)**

## Description

The present invention falls in the technical field of edible spreads processing and relates both to a process for manufacture of edible spreads and to an apparatus for carrying out this process.

Edible fats are emulsified with water-phases to form edible spreads. In margarine and other non-dairy spread production, formation of the emulsion is accomplished by cooling and working of a process stream containing both fat and water. It is commonplace to Pasteurise this process stream before cooling and working.

While fat and water are the principal components of edible spreads other components (such as emulsifiers, thickeners, preservatives and anti-spattering agents), as are mentioned below, are included in product formulations to manipulate product properties both in the final product and during processing.

It is commonplace to use "Votator" (RTM) units to work and cool the process stream in edible fat processing. These Votator units include two distinct types of units known as "A-units" and "C-units".

A-units, which are scraped-surface heat-exchangers, serve both to cool and crystallise an emulsion. C-units, which are pin-stirrers, are also used for crystallisation but can apply sufficient shear to induce phase inversion of a oil in water emulsion or transformation of a premix to a water-in-oil dispersion. In spread manufacture by the phase-inversion process, it is commonplace to separate the cooling and inversion steps, such that cooling occurs in one or more A-units in line, prior to a C-unit which functions as a phase invertor; thereby converting an oil-in-water process stream to a water-in-oil spread.

Non-inversion processing is normally used at high fat levels, particularly in margarine production with around 80% fat present in the products. Inversion processing is common at lower fat levels, particularly with products containing less than 40% fat. Inversion and non-inversion processing are alternatives for the production of fat continuous spreads with from 40-70% fat by weight. The present invention is concerned with inversion processing in so far as, in embodiments of the invention, a mixed phase premix is converted to a water-in-oil emulsion spread, particularly in these embodiments a 60% fat spread. While phase inversion occurs in known processes for the production of 60% fat spreads there is often little control of the inversion process.

Spreads are characterised by a wide range of physical product properties and organoleptic properties. Some of these properties are more important than others in consumer acceptance. In particular, good spreadability, keepability at ambient temperature, consistency both at storage and room temperature, mouth meltdown and oil-retention are important properties.

Keepability is known to be influenced by the water droplet distribution and water phase contents. Coarse emulsions containing bacterial and mould nutrients, such as proteins, generally have poor keepability. Fine emulsions are resistant to bacterial spoilage but are still succeptable to mould growth. Water phase distribution is influenced by processing conditions. Keepability can be improved markedly by cold-distribution and cold-storage, but this is not always practical. Keepability can also be improved by reducing the nutrient content or incorporating microbial growth inhibitors (such as salts and/or acids) in the product. However, reduction of protein content generally results in poor organoleptic properties and can influence processability of the emulsion. The use of preservatives, particularly substances such as potassium sorbate is commonplace, but is not acceptable to some groups of consumers. While is therefore known that both product composition and process conditions can influence the water-phase distribution, limited success has been enjoyed in the search for a combination of process conditions and product components which enable the manufacture of acceptable products of high physical and microbiological stability but with a very simple formulation.

The present invention concerns the a particular combination of processing means and/or process steps to enable the manufacture of a spread with a simple product formulation.

In general terms, we have determined that improvements in product properties for, 40-85% fat products and especially for 50-70% fat products are obtained by homogenising a substantially protein-free water-in-oil emulsion before further working and cooling of the homogenised emulsion to form a spread.

According to a first (apparatus) aspect of the present invention there is provided an installation for the production of a fat-continuous spread comprising, in line,

a) a first cooling and shearing unit;
b) homogeniser means,
c) further cooling and/or shearing units.

As mentioned above, it is commonplace for either a pre-mix to be prepared hot or pasteurised prior to inversion processing. Thereafter the first cooling and shearing unit is preferably at least one scraped surface heat exchanger, preferably an "A-unit" for cooling the process stream to the homogeniser input temperature and forming a fat-continuous emulsion with low but non-zero solids content. It is believed that the presence of the cooling and shearing unit is important to ensure that the feed into the homogenizer is fat-continuous and contains a small amount of solid fat.

In this regard reference can be made to US-A- 4 849 243 according to which a mixture of a fat and an aqueous phase is cooled down to 5 to 7% in one or more A units resulting in a product having a non-zero conductivity, indicative of a water continuous system, subsequently treated in a crystallizer, a homogeniser or a colloid mill and finally in a high shear mixer, wherein complete phase inversion was effected, evidenced by a zero conductivity. A fairly complex composition was used including emulsifiers, sorbate, whey, gelatin. No indication being given that one or more of these components can be omitted without deteriorating the final product quality.

EP-A-276 517 describes a process of manufacturing a 40% fat spread wherein a O/W cream is prepared using a homogeniser, this cream is cooled down to a solid fat content of at least 50% and thereafter mixed with a W/O emulsion containing about 7% fat solids. Both emulsions comprise sorbate and gelatin and additionally the W/O emulsion emulsifiers and the cream milk solids.

Preferably the homogeniser means comprise a two step in line homogeniser. It is convenient that the homogeniser should include a high pressure pump. We have found that an "APV Gaulin 300® series two step homogeniser" is suitable although a booster pump may be needed to supply product if the homogeniser is alone incapable of drawing the feedstock from a source. A minor advantage of using a homogeniser with a high pressure pump is that no dosing pump is required.

As a first alternative a homogeniser valve may be employed, "in line".

As a second alternative other homogenizer means such as jet or other high speed mixers may be exployed. The object of the homogenizer means being to prepare a fine emulsion and the apparatus employed not being limited to the homogenizer per se.

The further cooling and shearing units are elaborated upon below.

Described in terms of process aspects, a significant feature of the present invention is that it includes the particular process step of homogenising a fat-continuous emulsion.

Accordingly a further (process) aspect of the present invention provides a process for the production of an edible spread which comprises the steps of;

a) forming a coarse fat-continuous dispersion of water-in-oil with a solid fat index of 0.5-2.5%;
b) homogenising the product of step (a), and,
c) working and cooling the product of step (b) to obtain a spread.

Preferably homogenization is performed in a two stage homogenizer with a first step pressure drop of 20-50 bar. Preferably the second step pressure drop is also 20-50 bar

We have determined that with apparatus as is commonly available in spread production plants, the optimum pressure drop is 35 bar per step for the two-step homogenizer. The process can also be performed with a one step homogenization in which case a 30-40 bar pressure drop was found optimal.

Preferably the homogenisation temperature ranges from 20-35°C, more preferably the temperature ranges from 28-32°C. We have observed that with the apparatus used, the homogenization temperature is quite critical and it is important, with the particular apparatus used, that the temperature does not exceed 35°C.

The homogenisation process step can be conducted in batch or carried out continuously. A continuous process is preferred with a short distance to the next cooling and working group so as to reduce phase separation during process stream flow.

It is believed that homogenisation of the coarse, substantially protein-free premix prior to working and cooling (typically in a conventional spread production process) results in a final emulsion which has an acceptable microbiological stability at ambient temperature and is as organoleptically acceptable as products containing proteins.

While not wishing to be limited by any theory, it is also believed that cooling of the premix to homogenisation temperature produces preferably 1-2% of so-called 'alpha' crystals in the process stream more preferably 1.2-1.4%. Homogenisation of the premix disperses these crystals widely through the product providing many crystal seeds to initiate later crystallisation, leading to a homogeneous final structure. In the methods of the prior art there is a lesser distribution of these alpha-crystals and as a consequence crystal growth proceeds from fewer loci giving a coarser structure in the product.

In embodiments of the invention, the cooling and working units following the homogeniser are of the conventional A- and C-unit types. Preferably, these comprise an ACAC sequence, wherein "A" represents one or more cooling units and "C" represents one or more working units. This is a known sequence of working and cooling units.

It is preferable that the first of these units (an A-unit) should cool the process stream to below 25°C, and preferably to a temperature of around 18-20°C.

The second unit (a C-unit) is a working unit. We have determined that with the homogenised fat-continuous premix of the present invention the shear conditions in this unit may vary within wide limits with little effect on the drop size.

The exit temperature of the second cooling unit of the ACAC sequence, that is the second A-unit, should be as low as is practical. In preferred embodiments of the invention the process stream temperature should not exceed 19°C, and preferably be in the range 18-12°C.

In embodiments of the invention the last C-unit should work the product only to a small extent. With conventional equipment we have determined that this unit should operate at around 100-200 rpm so as to minimise overworking of the product.

In general this last working step of step c) should be performed at a shear equivalent of less than that subsisting in a C-unit operating at 500 rpm.

Similarly, in embodiments of the present invention the packaging machine should also be selected such that working of the product is kept to a minimum so as to ensure that water drop coalescence is substantially prevented and the emulsion remains fine.

Figure 1: shows in schematic form, a spread production line according to the present invention (fig 1B) and a spread production line according to the prior art (fig 1A).

Figure 2: shows a graph illustrating the effect of variation of homogeniser (5) conditions on drop size in the product.

Figure 3: shows a graph illustrating the effect of variation of the outlet temperature of the A-unit (9) on drop size in the product.

EXAMPLES:

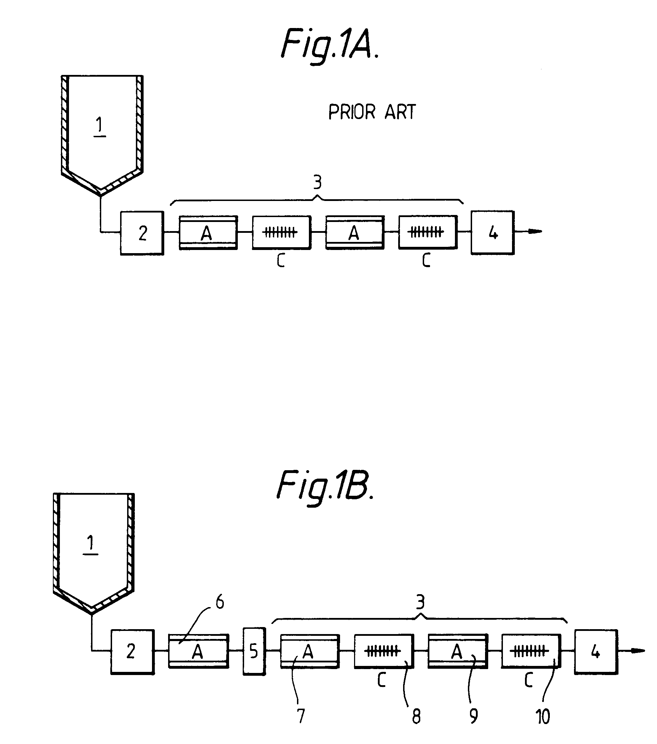

For comparative purposes figure 1A illustrates the method and apparatus of the present invention in schematic form as compared with a method of the prior art. Service circuits have been omitted from the diagram for the sake of clarity.

In the method of the prior art (figure 1a) a premix is prepared in tank (1), Pasteurised in a heating unit (2) and fed into VOTATOR® line (3). A conventional VOTATOR® line consists of A units and C-units, and it is not uncommon for these to be arranged in an ACAC sequence. In this method of the prior art it is believed that inversion of the oil-in-water premix to the water-in-oil product occurs in the first C unit. Product emerges from the end of the line into packing machine (4).

Example 1: The General Process:

Turning to figure 1B it can be seen that the apparatus according to the present invention is similar to that given in the comparative figure 1A. The same reference numerals have been used throughout. However a further VOTATOR A-unit® (6) and a homogenizer (5) have been inserted into the process line.

In order to make a product according to the present invention premix was made up with the following formulation and processed according to the method given below. Here, as throughout the specification, all percentages are expressed in terms of weight.

Fat Blend          59.55%
Hymono 8803®    00.15% (emulsifier)
Hymono 7804®    00.10% (emulsifier)
Bolec CM®        00.20% (emulsifier)
NaCl             00.15%
β-Carotene       15ppm (colour)
H&R 53967®       670ppm (flavour)
Water            39.86%

The premix was prepared by mixing together all the ingredients in a thermostatted tank (1) at 58-61°C. The premix was drawn from the tank with a booster pump (not shown) at a rate of 106 kg/hr and fed into an Votator (RTM) A-unit (6) with an process stream exit temperature of 16°C, and a service stream (liquid ammonia coolant) temperature of -20°C. From the A-unit, the product was fed into an APV Gaulin 300® series two-stage homogeniser (5) equipped with a high pressure pump. The pressure drop in the homogeniser was 35 Bar over each of the two stages, and the output temperature of the process stream was 26.5-29.5°C.

Variations in product properties obtained by variations of the homogenizer (5) temperature are elaborated upon in example 2 below.

From the homogeniser (5), the product was fed into an ACAC sequence (3) of cooling and working units. The first A-unit (7) was supplied with liquid ammonia coolant at -6°C and cooled the process stream to 16-19°C. The first C-unit (8) could be operated at a rotational speed of between 150-800 rpm without difficultly and a product emerged at a temperature of 20-25°C; the degree of heating being determined by the extent of working. The second A-unit (9) was supplied with liquid ammonia coolant at a temperature of -20°C and cooled the process stream to a temperature of 14.5°C.

Variations in product properties obtained by variation of the exit temperature of the second A-unit (9) are elaborated upon in example 3 below.

The second C-unit (10) operated at 150 rpm and product emerged from this unit, for packing, at a temperature of 17.5°C. The packing operation was performed on a low shear packing machine (4) so as to avoid overworking the product.

Product properties were measured for a range of samples, manufactured according to the method of the present invention. Typical values are as follows:

| Stevens values | 5°C | 360-293 |
|---|---|---|
| | 10°C | 315-217 |
| | 15°C | 107-78 |
| | 20°C | 37-44 |
| | 23°C | 20-13 |
| | 25°C | 13-15 |

The products showed acceptable spreading behaviour and excellent second place keepability.

Comparative Example 1

In order to compare the effects of homogenisation with non-homogenised products a composition as used in example 1 was processed through a "Votator"® sequence of AACAAC to product a spread having as near as possible the same physical characteristics of the spread of example 1. The following results were obtained:

| | | Example 1 | | Comparison | |
|---|---|---|---|---|---|
| Stevens values | | | | | |
| | (wk1) | (wk4) | | (wk1) | (wk4) |
| 5°C | 288 | 432 | | 331 | 332 |
| 10°C | 170 | 225 | | 202 | 179 |
| 15°C | 91 | 145 | | 127 | 76 |
| 20°C | 45 | 54 | | 49 | 26 |
| 25°C | 20 | 20 | | 22 | 12 |
| | | | | | |
| D 3,3 | 1.0 | 1.9 | | 2.5 | 2.6 |

Other properties:

| | | | | | |
|---|---|---|---|---|---|
| taste | 6.9 | 6.9 | | 6.9 | 7.0 |
| spreading | 1.5 | 1.5 | | 2.0 | 2.0 |

It can be seen from these figures that there is no significant difference in the products of the present invention and those of the prior art as regards the Stevens values and their variation with time during storage under constant conditions. The taste of the products of the present invention is slightly better on this 1-10 scale.

Turning to second-place keepability, the following results were obtained for a spread prepared according to example 1 as compared with a spread prepared from an identical composition according to a method of the prior art. The examples were repeated with both wrapper margarine fat blends (W) and tub margarine fat blends (T).

|  | Example 1 | | Comparative | |
|---|---|---|---|---|
|  | (T) | (W) | (T) | (W) |
| Consistency*: | | | | |
| 10°C | 7.0 | 7.5 | 6.5 | 6.5 |
| 20°C | 7.0 | 7.5 | 7.0 | 6.5 |
| 25°C | 6.5 | 6.5 | 5.0 | 6.0 |
| Oil exudation^: | | | | |
|  | 237 | 139 | 246 | 200 |

*measured after repeated temperature cycling from 10°C to 25°C over a period of seven days on a scale of 1-10.

^measured in mg oil/cm.cm. Lower scores are better.

It can be seen that the products of the present invention exhibit improved second-place keepability, especially when the consistency at higher temperatures is considered.

Example 2: Homogeniser Temperature:

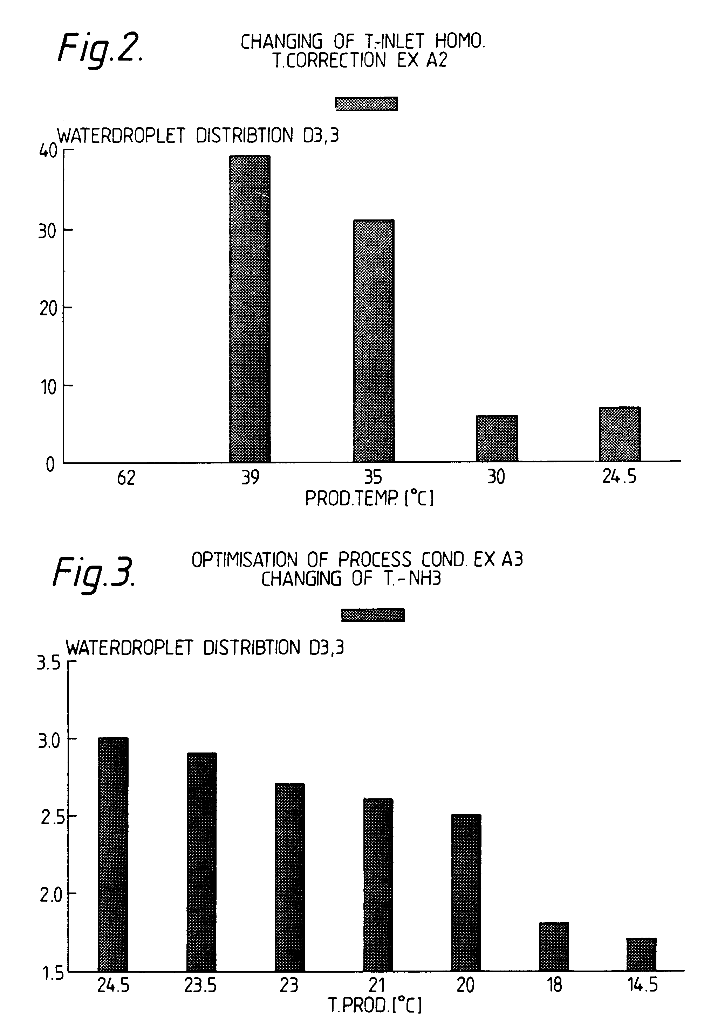

As mentioned in the preamble, the homogenisation temperature had an effect on product properties. Figure 2 shows the effect of temperature variations on water-drop distribution, with examples of the invention given for temperatures below 35°C and comparative examples at temperatures above 35°C. At homogeniser (5) temperatures below 35°C the water droplet size and distribution are acceptable, above this temperature, coarse emulsions were obtained with unacceptable properties.

Example 3: The Second A-unit Exit Temperature:

As also mentioned in the preamble, the exit temperature of the A unit (9) is to some degree important. Figure 3 shows the effect of variations in the cooling temperature on the D3,3 of the eventual product. It can be seen from the graph that the D3,3 decreases with the outlet temperature of the A-unit (9).

Example 4: Ascorbic Acid as Acidifying Agent:

Various modifications may be made within the scope of the present invention. One such modification is the use of ascorbic acid.

In the absence of protein, ascorbic acid can be used as a pH modifying agent. In the presence of protein the buffer capacity of the amino-acid residues is sufficient to prevent reasonable quantities of ascorbic acid having a significant effect on the pH.

Example 5: Products Free From Added Emulsifiers:

Comparative experiments were performed between products made according to the method of claim 1 with and without emulsifiers, using the following formulations. An attempt was also made to manufacture a spread according to a method of the prior art both with and without an emulsifier. The following results were obtained:

| | Example 5. | Example 1. | Prior Art |
|---|---|---|---|
| Fat Blend | 60% | 59.55% | 59.55% |
| Lecithin | 0 | 0.2% | 0.2% |
| Hymono 7804® | 0 | 0.1% | 0.1% |
| Hymono 8803® | 0 | 0.15% | 0.15% |
| Beta Carotene | 25ppm | 25ppm | 25ppm |
| Water | 39.85% | 39.85% | 39.85% |
| NaCl | 0.15% | 0.15% | 0.15% |
| Flavour | trace | trace | trace |
| Homog. | yes | yes | no |
| Taste | 6.9 | 6.6 | 6.6 |
| Consistency | | | |
| @ 10°C | 7.5 | 7.5 | 7.5 |
| @ 20°C | 6.0 | 7.0 | 6.5 |
| @ 25°C | 4.5 | 5.5 | 5.5 |
| Meltdown | 6.9 | 6.6 | 6.9 |
| D 3,3 | 1.3 | 1.0 | 2.5 |
| sigma | 2.3 | 2.5 | 1.9 |
| 2pc* | yes | yes | no |

*2pc= second place keepability

With the method of the present invention and with the prior art method, emulsifier containing spreads could be made (compare the "Example 1" column and the "prior art" column). In this case as with example 1 the products of the present invention exhibited 'second place keepability' much improved over the prior art.

Despite the attempt being made, it proved impossible to make a product without emulsifiers by the method of the prior art. The emulsion which was produced had large unstable water drops and could not be considered suitable for use as a spread. However, with the method of the present invention a spread could be manufactured without the use of emulsifiers which had properties comparable to those of the prior art product, and in addition exhibited 'second place keepability'.

Microbiological assay after purposeful inoculation of the process stream with either penicillium spp. and paecilomyces revealed that the products of the present invention were much less able to support growth of these fat-splitting microbes, than products of the prior art.

Example 6: Use of Emulsifier as an Anti-Spattering Agent:

A minor drawback of the products of example 5 which contained no emulsifiers was that they exhibited some spattering on use in frying, ejecting hot fat from the pan. On re-introduction of the lecithin (0.2-0.45wt% native bean-oil lecithin) into the product formulation it was determined that the spattering value could be greatly improved to a value comparable with commercial full fat (80%) spreads. In this instance it is important to note that the lecithin is not required as an emulsifier, as the spreads are stable in the absence of an emulsifier. The lecithin in this instance finds a use as an anti-spattering agent in a spread which is otherwise stable.

In the examples of this description the mean particle sizes are expressed as $D_{3,3}$, the systematic code for "volume-weighted geometric mean diameter" as further defined in Part. Part. Syst Charact 7 (1990) 233-241 and ibid 8 (1991) 237-241. In these articles "sigma" is defined as the standard deviation of the mean value.

**Claims**

1. An installation for the production of a fat-continuous spread comprising, in line,
    a) a first cooling and shearing unit for cooling and/or shearing or the process stream;
    b) homogeniser means for homogenisation of the process stream, and characterized by
    c) further cooling and shearing units for further cooling and shearing of the process stream.

2. Installation according to claim 1, wherein the homogeniser means comprise a two step in line homogeniser.

3. Installation according to claim 1 wherein the homogeniser means comprise an in-line homogeniser valve through which the process stream is directed.

4. Installation according to claim 1, wherein the homogeniser means comprise a jet mixer.

5. Installation according to claim 1, wherein the homogeniser means comprise a high speed mixer.

6. Installation according to any claim 1-5 wherein the cooling and shearing units following the homogeniser are of the conventional A- and C-unit types.

7. Installation according to claim 6, wherein the cooling and shearing units comprise an ACAC sequence.

8. A process for the production of an edible spread which comprises the steps of;
    a) forming a coarse fat-continuous dispersion of water-in-oil, and optionally cooling said dispersion, so as to obtain a fat continuous emulsion comprising from 0.5 to 2.5% solid fat.
    b) homogenising the product of step (a) and,
    c) working and cooling the product of step (b) to obtain an edible emulsion spread.

9. A process according to claim 8 wherein the or each homogenizer pressure drop in step (b) is 20-50 bar.

10. A process according to claim 8, wherein the homogenisation temperature in step (b) lies between 20-35°C.

11. A process according to claim 10, wherein the homogenisation temperature ranges from 28 to 32°C.

12. A process according to claim 8, wherein the working and cooling of step (c) is performed in an ACAC sequence, wherein A represents one or more cooling units and C represents one or more working units.

13. A process according to claim 8-12 wherein at least part of the cooling of working and cooling step (c) is performed prior to said working, said cooling being to a temperature below 25°C.

14. A process according to claim 13, wherein said cooling is performed to a temperature in the range 18-20°C.

15. A process as claimed in any claim 8-14 wherein at least a second part of the cooling of working and cooling step (c) is performed after a first working step, said cooling being to a temperature below 19°C.

16. A process according to claim 15, wherein said second cooling is performed to a temperature in the range 18-12°C.

17. A process as claimed in any claim 8-16, wherein the last working step of step (c) is performed at a shear equivalent of less than that subsisting in a C-unit operating at 500 rpm.

**Patentansprüche**

1. Vorrichtung zur Herstellung eines fettkontinuierlichen Aufstriches, die in einer Reihe liegend umfaßt:
   a) eine erste Kühl- und Schereinheit zum Kühlen und/oder Scheren des Verfahrensstromes,
   b) Homogenisiermittel zum Homogenisieren des Verfahrensstromes und die gekennzeichnet ist durch
   c) weitere Kühl- und Schereinheiten zum weiteren Kühlen und Scheren des Verfahrensstromes.

2. Vorrichtung nach Anspruch 1, in welcher die Homogenisiermittel einen zweistufigen Homogenisator in einer Reihe liegend umfassen.

3. Vorrichtung nach Anspruch 1, in welcher die Homogenisiermittel ein Homogenisatorventil in einer Reihe liegend umfassen, durch welches der Verfahrensstrom geleitet wird.

4. Vorrichtung nach Anspruch 1, in welcher die Homogenisiermittel einen Strahlmischer umfassen.

5. Vorrichtung nach Anspruch 1, in welcher die Homogenisiermittel einen Hochgeschwindigkeitsmischer umfassen.

6. Vorrichtung nach irgendeinem der Ansprüche 1 bis 5, in welcher die Kühl- und Schereinheiten anschließend an den Homogenisator die konventionellen A- und C-Units sind.

7. Vorrichtung nach Anspruch 6, in welcher die Kühl- und Schereinheiten eine ACAC-Sequenz umfassen.

8. Verfahren zur Herstellung eines eßbaren Aufstriches das die Schritte umfaßt:
   a) Bildung einer groben fettkontinuierlichen Wasser-in-Öl-Dispersion und fakultatives Kühlen dieser Dispersion zur Erzielung einer fettkontinuierlichen Emulsion, die 0,5 bis 2,5 % Festfett umfaßt;
   b) Homogenisieren des Produktes von Schritt (a) und
   c) Bearbeiten und Kühlen des produktes von Schritt (b) zur Erzielung eines eßbaren Emulsionsaufstriches.

9. Verfahren nach Anspruch 8, in welchem der oder jeder Druckabfall im Homogenisator in Schritt (b) 20 bis 50 bar beträgt.

10. Verfahren nach Anspruch 8, in welchem die Homogenisierungstemperatur in Schritt (b) zwischen 20 und 35°C liegt.

11. Verfahren nach Anspruch 10, in welchem die Homogenisierungstungstemperatur 28 bis 32°C beträgt.

12. Verfahren nach Anspruch 8, in welchem das Bearbeiten und Kühlen von Schritt (c) in einer ACAC-Sequenz durchgeführt wird, wobei A eine oder mehrere Kühleinheiten und C eine oder mehrere Bearbeitungseinheiten bedeuten.

13. Verfahren nach Anspruch 8 bis 12, in welchem mindestens ein Teil der Kühlung des Bearbeitungs- und Kühlschrittes (c) vor dieser Bearbeitung erfolgt, wobei das Kühlen auf eine Temperatur unter 25 °C erfolgt.

14. Verfahren nach Anspruch 13. in welchem das Kühlen auf eine Temperatur im Bereich von 18 bis 20°C erfolgt.

15. Verfahren nach irgendeinem Anspruch 8 bis 14, in welchem mindestens ein zweiter Teil des Kühlens des Bearbeitungs- und Kühlschrittes (c) nach einem ersten Bearbeitungsschritt durchgeführt wird, wobei das Kühlen auf eine Temperatur unter 19°C erfolgt.

16. Verfahren nach Anspruch 15, in welchem das zweite Kühlen auf eine Temperatur im Bereich von 18 bis 12°C erfolgt.

17. Verfahren nach irgendeinem Anspruch 8 bis 16, in welchem der letzte Bearbeitungsschritt von Schritt (c) bei einem geringeren Scheräquivalent erfolgt als das, das in einer bei 500 U/Min arbeitenden C-Unit vorherrscht.

## Revendications

1. Une installation pour la production d'une matière à tartiner grasse continue, comprenant, en ligne :
   a) une première unité de refroidissement et de cisaillement pour refroidir et/ou cisailler le courant de fabrication ;
   b) un dispositif d'homogénéisation pour homogénéiser le courant de fabrication ; et caractérisé par
   c) d'autres unités de refroidissement et de cisaillement pour refroidir et cisailler plus avant le courant de fabrication.

2. L'installation selon la revendication 1, dans laquelle le dispositif d'homogénéisation comprend un homogénéisateur à deux étapes en ligne.

3. L'installation selon la revendication 1, dans laquelle le dispositif d'homogénéisation comprend une vanne d'homogénéisateur en ligne au travers de laquelle est dirigé le courant de fabrication.

4. L'installation selon la revendication 1, dans laquelle le dispositif d'homogénéisation comprend un mélangeur à jet.

5. L'installation selon la revendication 1, dans laquelle le dispositif d'homogénéisation comprend un mélangeur à grande vitesse.

6. L'installation selon l'une des revendications 1 à 5, dans laquelle les unités de refroidissement et de cisaillement qui viennent en aval de l'homogénéisateur sont des unités traditionnelles du type A et C.

7. L'installation selon la revendication 6, dans laquelle les unités de refroidissement et de cisaillement comprennent une séquence ACAC.

8. Un procédé de production d'une matière à tartiner comestible comprenant les étapes consistant à :
   a) former une dispersion grasse continue grossière eau dans l'huile, et de façon optionnelle, refroidir ladite dispersion afin d'obtenir une émulsion grasse continue contenant de 0,5 à 2,5 % de matière grasse solide ;
   b) homogénéiser le produit de l'étape (a) ; et
   c) travailler et refroidir le produit de l'étape (b) afin d'obtenir une matière à tartiner comestible sous forme d'émulsion.

9. Un procédé selon la revendication 8, dans lequel la chute de pression ou chaque chute de pression de l'homogénéisateur de l'étape (b) est de 25 - 50 bar.

10. Un procédé selon la revendication 8, dans lequel la température d'homogénéisation de l'étape (b) est comprise entre 20 et 35°C.

11. Un procédé selon la revendication 10, dans lequel la température d'homogénéisation est comprise dans la gamme allant de 28 à 32°C.

12. Un procédé selon la revendication 8, dans lequel le travail et le refroidissement de l'étape (c) sont effectués dans une séquence ACAC, dans laquelle A représente une ou plusieurs unités de refroidissement et C représente une ou plusieurs unités de travail.

13. Un procédé selon l'une des revendications 8 à 12, dans lequel au moins une partie du refroidissement de l'étape (c) de travail et de refroidissement, est effectuée avant ledit travail, ledit refroidissement étant effectué à une température inférieure à 25°C.

14. Un procédé selon la revendication 13, dans lequel ledit refroidissement est effectué à une température comprise dans la gamme allant de 18 à 20°C.

15. Un procédé selon l'une des revendications 8 à 14, dans lequel au moins une seconde partie du refroidissement de l'étape (c) de travail et de refroidissement est effectuée après une première étape de travail, ledit refroidissement étant effectué à une température inférieure à 19°C.

16. Un procédé selon la revendication 15, dans lequel ledit second refroidissement est effectué à une température comprise dans la gamme allant de 18 à 12°C.

17. Un procédé selon l'une des revendications 8 à 16, dans lequel la dernière étape de travail de l'étape (c) est effectuée à un cisaillement équivalent ou inférieur à celui qui subsiste dans une Unité C fonctionnant à 500 tours/minute.

## Fig.1A.

PRIOR ART

## Fig.1B.

## Fig.2.

CHANGING OF T.-INLET HOMO.
T.CORRECTION EX A2

WATERDROPLET DISTRIBTION D3,3

## Fig.3.

OPTIMISATION OF PROCESS COND. EX A3
CHANGING OF T.-NH3

WATERDROPLET DISTRIBTION D3,3